Europäisches Patentamt

European Patent Office

Office européen des brevets

(11) Publication number: **0 175 748**
**B1**

# EUROPEAN PATENT SPECIFICATION

(45) Date of publication of patent specification: 03.05.89

(51) Int. Cl.⁴: **G 06 F 1/04**

(21) Application number: 85901643.8

(22) Date of filing: 26.03.85

(86) International application number:
PCT/SE85/00131

(87) International publication number:
WO 85/04498 10.10.85 Gazette 85/22

(54) PARALLEL SYNCHRONOUS OPERATION.

(30) Priority: 26.03.84 SE 8401661

(43) Date of publication of application:
02.04.86 Bulletin 86/14

(45) Publication of the grant of the patent:
03.05.89 Bulletin 89/18

(84) Designated Contracting States:
AT BE CH DE GB LI NL

(56) References cited:
SE-B-76 112 234
SE-B-80 019 102
SU-A- 809 135

(73) Proprietor: TELEFONAKTIEBOLAGET L M
ERICSSON
S-126 25 Stockholm (SE)

(72) Inventor: SUNDELL, Gösta, Ingvar
Kungssätravägen 14
S-127 37 Skärholmen (SE)

(74) Representative: Johnsson, Helge et al
Telefonaktiebolaget L M Ericsson
S-126 25 Stockholm (SE)

Courier Press, Leamington Spa, England.

## Description

### Technical field

The invention relates to apparatus for providing parallel synchronous operation of two microprocessors in a computer system.

### Background art

Modern computers and computer systems often include micro-processors, with which subfunctions are performed. To obtain great reliability in their performance it is desirable simultaneously to perform the subfunctions in two microprocessors working in parallel. They must operate synchronous to enable comparison of their results. Their clock frequency is controlled by the computer system clock, which has its frequency divided in the clock counters of the microprocessors. There is often a fixed division by a factor of four. If further division is required this is suitably performed with the aid of a JK-flipflop connected to the respective clock input. A problem in synchronizing two microprocessors is that their internal functions are inaccessible from outside. It is therefore not possible to achieve parallel synchronism with the aid of a resetting pulse.

### Disclosure of invention

The present invention relates to apparatus, with the aid of which two microprocessors are brought into parallel synchronous operation. The invention is characterized in the accompanying claims.

### Brief description of drawings

The invention in accordance with the claims is described hereinafter with the aid of the accompanying drawings, where Figure 1 illustrates one embodiment of the invention and Figure 2 another embodiment. Figure 3 is a time chart for the signals with respect to synchronization.

### Best mode for carrying out the invention

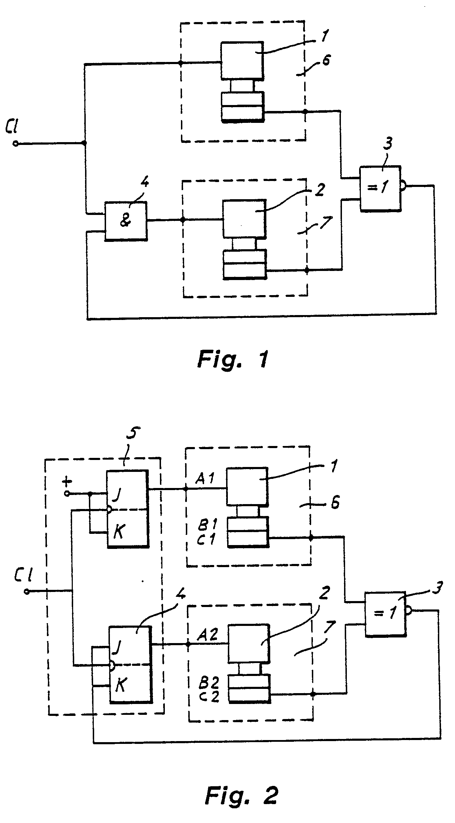

Figure 1 is a logic diagram where the apparatus comprises a negative exclusive OR circuit 3 and an AND circuit 4 connected to two clock counters 1, 2, each associated with a microprocessor 6, 7. The computer system clock CI is connected to the input of the clock counter 1. The output of the circuit 4 is connected to the input of the other clock counter 2, one input of the circuit 4 being connected to the system clock CI. The frequency of this clock is divided by a factor of four in the clock counters 1, 2. The outputs of the latter are each connected to an input of the circuit 3, the output of which is connected to the other input of the circuit 4.

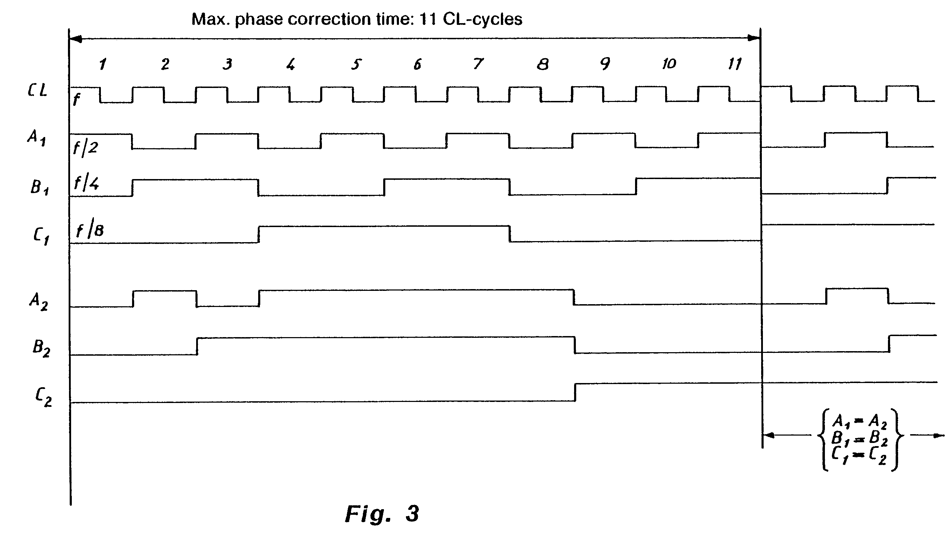

The output of the circuit 3 will be zero for a signal difference at the outputs of the clock counters 1, 2. The system clock signal is then prevented by the circuit 4 from reaching the clock counter 2. If there is no difference in the signals on the outputs of the clock counters, the output of the circuit 3 is ONE, and the circuit 4 allows the system clock signals to reach the clock counter 2. From this it follows that for asynchronism between the clock counters, the counter 2 will be periodically stopped until parallel synchronism occurs (described in detail in connection with Figure 3).

Figure 2 illustrates another embodiment. An arithmetic circuit 5 comprising a JK-flipflop to each microprocessor is connected between the system clock and the microprocessors. The arithmetic circuit divides the system clock frequency by a factor of two, resulting in that the total division of the frequency will be by a factor of eight. The JK inputs to the flipflop having its output connected to the clock input of the other microprocessor 7 are commonly connected to the output of the logical circuit 3. The AND function of the circuit 4 in Figure 1 is thus replaced.

The time chart in Figure 3 illustrates the phasing-in to parallel synchronism between the microprocessors, in the case where the frequency of the system clock CI is divided by a factor of eight, according to Figure 2. In the chart, $A_1$, $B_1$ and $C_1$ depict the frequency division sequence in the microprocessor 6, while $A_2$, $B_2$ and $C_2$ depict the frequency division sequence in the microprocessor 7. One of the two most unfavourable cases possible is illustrated in the diagram. For describing the phasing-in a positive period is denoted by a logical ONE and a negative by a logical ZERO. A shifts when CI goes from 0 to 1, B shifts when A goes from 1 to 0, and C shifts when B goes from 1 to 0. The CI pulses to $A_2$ are stopped at difference between $C_1$ and $C_2$. According to the chart, this occurs for the first time when $C_1$ goes from 0 to 1 after the CI period 3. $A_2$ is in the state 1 until the CI period when $C_1$ has gone from 1 to 0, i.e. after the period 8. Then $A_2$ gets the CI pulse and goes from 1 to 0. At the same time $B_2$ goes from 1 to 0 and $C_2$ from 0 to 1. Then there is once again a difference between $C_1$ and $C_2$, thus $A_2$ being blocked again for the CI pulses. This difference prevails until $C_1$ once again goes from 0 to 1, which takes place after the period 11. There is subsequent equality between $A_1$ and $A_2$, and $B_1$ and $B_2$, $C_1$ and $C_2$, i.e. a state of parallel synchronism. Independent what division factor is used for the CI frequency the phasing-in always takes place at the latest within 1, 5 times the cycle time of the clock counters. Figure 3 also explains the phasing-in of the apparatus according to Figure 1, with the difference that the division uses a factor of 4, and thus only the frequency division sequences A and B exist.

### Claims

1. Apparatus for providing parallel synchronous operation of a first and a second microprocessor (6, 7) in a computer system, where the clock frequency of the microprocessors is obtained by internal division of a system clock frequency, characterized in that the apparatus includes a switch (4) for breaking and making the system clock signal path to the clock input of the second microprocessor (7), and a logical circuit (3) for controlling the switch (4), the two inputs of the circuit (3) being connected to the clock outputs of the microprocessors (6, 7) such that for signal difference between their inputs the logical circuit causes the switch (4) to break the system clock signal path, while for signal equality on the clock outputs it causes the switch to make said path, a stepwise phasing-in to parallel synchronism thus being attained.

2. Apparatus as claimed in claim 1, characterized in that the logical circuit (3) comprises a negative exclusive OR circuit and in that the switch (4) comprises an AND circuit.

3. Apparatus as claimed in claim 1, characterized in that the switch (4) is included in a dividing arithmetic circuit (5), comprising a first and a second JK-flipflop each being connected between the system clock and the clock input of the microprocessor assigned to said flipflop, the second JK flipflop having its output connected to the second microprocessor (7) and its J and K inputs connected to the output of the logical circuit (3), this JK flipflop performing the function of the switch (4).

**Patentansprüche**

1. Vorrichtung zur Lieferung eines parallelen, synchronen Betriebes eines ersten und zweiten Mikroprozessors (6, 7) in einem Rechnersystem, wobei die Taktfrequenz der Mikroprozessoren durch eine interne Teilung in der Systemtaktfrequenz erhalten wird, dadurch gekennzeichnet, dass die Vorrichtung einen Schalter (4) aufweist, um den Systemtaktsignalweg zum Takteingang des zweiten Mikroprozessors (7) zu trennen und herzustellen, und eine Logikschaltung (3) zur Steuerung des Schalters (4), und dass die beiden Eingänge der Logikschaltung (3) derart an die Taktausgänge der Mikroprozessoren (6, 7) angeschlossen sind, dass bei einem Signalunterschied zwischen ihren Eingängen die Logikschaltung den Schalter (4) veranlasst, den Systemtaktsignalweg zu trennen, während sie bei Signalgleichheit an den Taktausgängen den Schalter veranlasst, den Systemtaktsignalweg herzustellen, womit ein stufenweiser Phaseneinlauf im parallelen Gleichlauf erzielt wird.

2. Vorrichtung nach Anspruch 1, dadurch gekennzeichnet, dass die Logikschaltung (3) eine negative Exklusiv-ODER-Schaltung umfasst, und dass der Schalter (4) eine UND-Schaltung umfasst.

3. Vorrichtung nach Anspruch 1, dadurch gekennzeichnet, dass der Schalter (4) in einer teilenden Rechenschaltung (5) enthalten ist, die ein erstes und zweites JK-Flipflop umfasst, wovon jedes zwischen dem Systemtakt und dem Takteingang des gem genannten Flipflop zugeordneten Mikroprozessors angeschlossen ist, dass das zweite JK-Flipflop mit seinem Ausgang an den zweiten Mikroprozessor (7) angeschlossen ist und seine J- und K-Eingänge an den Ausgang der Logikschaltung (3) angeschlossen sind, und dieses JK-Flipflop die Funktion des Schalters (4) durchführt.

**Revendications**

1. Appareil pour produire le fonctionnement synchrone en parallèle d'un premier et d'un second microprocesseurs (6, 7) dans un système d'ordinateur où la fréquence d'horloge des microprocesseurs est obtenue par la division interne d'une fréquence d'horloge du système, caractérisé en ce que l'appareil comprend un commutateur (4) pour interrompre et établir le trajet du signal d'horloge du système vers l'entrée d'horloge du second microprocesseur (7), et un circuit de logique (3) pour commander le commutateur (4), les deux entrées du circuit (3) étant reliées aux sorties d'horloge des microprocesseurs (6, 7) de façon que, pour une différence de signal entre leurs entrées, le circuit de logique fasse que le commutateur (4) interrompe le trajet de signal de l'horloge du système, tandis que pour une égalité de signal sur les sorties d'horloge, le circuit de logique fasse que le commutateur établisse ce trajet, une mise en phase pour atteindre le synchronism en parallèle étant ainsi obtenue pas à pas.

2. Appareil suivant la revendication 1, caractérisé en ce que le circuit de logique (3) comprend un circuit OU exclusif négatif et en ce que le commutateur (4) comprend un circuit ET.

3. Appareil suivant la revendication 1, caractérisé en ce que le commutateur (4) est inclu dans un circuit arithmétique diviseur (5) comprenant des premier et second basculeurs JK, chacun d'eux étant monté entre l'horloge du système et l'entrée d'horloge du microprocesseur assigné à ce basculeur, le second basculeur JK ayant sa sortie reliée au second microprocesseur (7) et ses entrées J et K reliées à la sortie du circuit de logique, ce basculeur JK jouant le rôle du commutateur (4).

Fig. 1

Fig. 2

Max. phase correction time: 11 CL-cycles

$CL$   $f$

$A_1$   $f/2$

$B_1$   $f/4$

$C_1$   $f/8$

$A_2$

$B_2$

$C_2$

$$\left.\begin{array}{l} A_1 = A_2 \\ B_1 = B_2 \\ C_1 = C_2 \end{array}\right\}$$

*Fig. 3*

2